Europäisches Patentamt

European Patent Office

Office européen des brevets

(11) Veröffentlichungsnummer: **0 227 977**
**B1**

(12) **EUROPÄISCHE PATENTSCHRIFT**

(45) Veröffentlichungstag der Patentschrift: **18.04.90**

(51) Int. Cl.⁵: **A 47 J 31/10**

(21) Anmeldenummer: **86116941.5**

(22) Anmeldetag: **05.12.86**

(54) **Kaffeemaschine.**

(30) Priorität: **14.12.85 DE 8535291 u**

(43) Veröffentlichungstag der Anmeldung:
**08.07.87 Patentblatt 87/28**

(45) Bekanntmachung des Hinweises auf die
Patenterteilung:
**18.04.90 Patentblatt 90/16**

(84) Benannte Vertragsstaaten:
**AT BE CH DE ES FR GB GR IT LI LU NL SE**

(56) Entgegenhaltungen:
**DE-A-1 554 630
DE-A-2 410 620
DE-C- 512 276
DE-U-7 306 139
FR-A- 763 314
FR-A-2 072 459
US-A-2 230 304
US-A-2 306 921
US-A-3 442 199
US-A-4 008 656**

(73) Patentinhaber: **Melitta-Werke Bentz & Sohn
Ringstrasse 99
D-4950 Minden 1 (DE)**

(72) Erfinder: **Schmidt, Heinrich
Ellerburger Strasse 30
D-4952 Porta Westfalica (DE)**

(74) Vertreter: **Loesenbeck, Karl-Otto, Dipl.-Ing. et al
Jöllenbecker Strasse 164
D-4800 Bielefeld 1 (DE)**

Courier Press, Leamington Spa, England.

## Beschreibung

Die vorliegende Erfindung betrifft eine Kaffeemaschine zur Herstellung von gefiltertem Kaffee, bestehend aus einem Frischwasserbehälter mit einer unteren Auslauföffnung, einem Heizaggregat zur Erhitzung des Frischwassers, einem Filtergefäß zur Aufnahme eines Filterpapiereinsatzes sowie einem unterhalb des Filtergefäßes angeordneten Aufnahmebehälter für den gefilterten Kaffee, wobei der Frischwasserbehälter oberhalb des Filtergefäßes angeordnet und das Filtergefäß lösbar sowie abdichtend mit dem Frischwasserbehälter verbunden ist, das Heizaggregat in Form von einem oder mehreren Heizstäben, Heizspiralen od.dgl. im Frischwasserbehälter angeordnet und die Auslauföffnung des Frischwasserbehälters mit einem beweglichen Schließorgan versehen ist.

Eine Kaffeemaschine dieser Art ist aus der US-A-22 30 304 bekannt.

Bei der Kaffeemaschine nach dieser Literaturstelle ist zwar kein Filterpapiereinsatz vorgesehen, ein derartiger Filterpapiereinsatz könnte allerdings auch bei einer Kaffeemaschine nach der US-A-22 30 304 verwendet werden. In diesem Falle könnte allerdings ausschließlich ein Rundfilterblatt zum Einsatz gelangen, welches auf den Boden des Filtergefäßes aufgelegt wird.

Demnach wäre es möglich, das Brühwasser zwischen dem Filterpapiereinsatz und den Wandungen des Filtergefäßes austreten könnte.

Es würde dabei Wasser durch das Filtergefäß hindurchlaufen, ohne am Filtrationsprozeß teilzunehmen.

Der vorliegenden Erfindung liegt die Aufgabe zugrunde, eine Kaffeemaschine der gattungsgemäßen Art unter Beibehaltung des Vorteiles, innerhalb kurzer Zeit große Mengen heißen Wassers in das Filtergefäß fördern und dieses Wasser auf hoher Temperatur halten zu können, so zu gestalten, daß ein Auslaufen des Brühwassers im Bereich zwischen dem Filterpapiereinsatz und den Wandungen des Filtergefäßes verhindert wird.

Diese Aufgabe wird erfindungsgemäß dadurch gelöst, daß die Außenseite des etwa kegelförmig vertieften Bodens des Frischwasserbehälters einen Dichtrand für den oberen Rand des am Frischwasserbehälter befestigten Filtergefäßes aufweist und daß der Filterpapiereinsatz im Dichtungsbereich zwischen Frischwasserbehälter und Filtergefäß eingeklemmt ist, wobei im Dichtungsbereich zwischen Frischwasserbehälter und Filtergefäß die Außenseite des Dichtrandes sowie der obere, innere Rand des Filtergefäßes kegelförmig ausgebildet sind.

Eine derartige Kaffeemaschine kann in relativ einfacher Gehäusekonstruktion ausgeführt werden, da das Frischwasser durch ein unmittelbar im Frischwasserbehälter angeordnetes Heizaggregat aufgeheizt wird und somit auf einen Durchlauferhitzer verzichtet werden kann. Nach dem Erhitzen des Frischwassers im Frischwasserbehälter und nach dem Öffnen des Schließorganes im Bereich der Auslauföffnung des Frischwasserbehälters läuft innerhalb kurzer Zeit eine vergleichsweise große Menge erhitzten Wassers in das Filtergefäß. Hier wird der Effekt des Schwallbrühens erzielt, der vergleichbar ist mit dem manuellen Eingießen von erhitztem Wasser aus einem Kessel in ein Filtergefäß, wie es beim Kaffeekochen "von Hand" erfolgt.

Da der Filterpapiereinsatz zwischen Frischwasserbehälter und Filtergefäß eingeklemmt ist, wird unabhängig vom Füllzustand des Filtergefäßes ein Auslaufen des Brühwassers im Bereich zwischen dem Filterpapiereinsatz und den Wandungen des Filtergefäßes verhindert.

Bedingt durch die Tatsache, daß Frischwasserbehälter und Filtergefäß nach dem Öffnen des Schließorganes im Bereich der Auslauföffnung des Frischwasserbehälters praktisch ein gemeinsames Behältnis bilden, in dem sich das Brühwasser befindet und bedingt durch die Tatsache, daß im Frischwasserbehälter ein Heizaggregat vorgesehen ist, besteht die Möglichkeit, das Brühwasser solange nachzuheizen, bis das Niveau des Heizaggregates unterschritten ist. Auf diese Art und Weise ist sichergestellt, daß das das Filtergefäß durchtretende Brühwasser immer eine relativ hohe Temperatur beibehält, so daß der gefilterte Kaffee eine relativ hohe Temperatur besitzt.

U.U. kann durch diese Maßnahme sogar auf eine ansich bekannte Warmhalteplatte für den Aufnahmebehälter für den gefilterten Kaffee verzichtet werden.

In den beigefügten Zeichnungen ist ein Ausführungsbeispiel der Erfindung dargestellt, welches im folgenden näher beschrieben wird.

Es zeigen:

Fig. 1 eine Seitenansicht einer erfindungsgemäßen Kaffeemaschine

Fig. 2 eine Ansicht der Kaffeemaschine in Richtung des Pfeiles II in Fig. 1

Fig. 3 eine der Fig. 1 entsprechende Seitenansicht der Kaffeemaschine, wobei Frischwasserbehälter, Filtergefäß und ein Teil des Gehäuses im Schnitt dargestellt sind, gezeigt bei mit Wasser gefülltem, aber geschlossenem Frischwasserbehälter

Fig. 4 einen der Fig. 3 entsprechenden Schnitt durch Frischwasserbehälter und Filtergefäß, gezeigt nach dem Öffnen der Auslauföffnung des Frischwasserbehälters

Fig. 5 eine der Fig. 3 entsprechende Darstellung der Kaffeemaschine, gezeigt bei geöffneter Auslauföffnung des Frischwasserbehälters und nach vollständiger Füllung des Filtergefäßes mit Brühwasser.

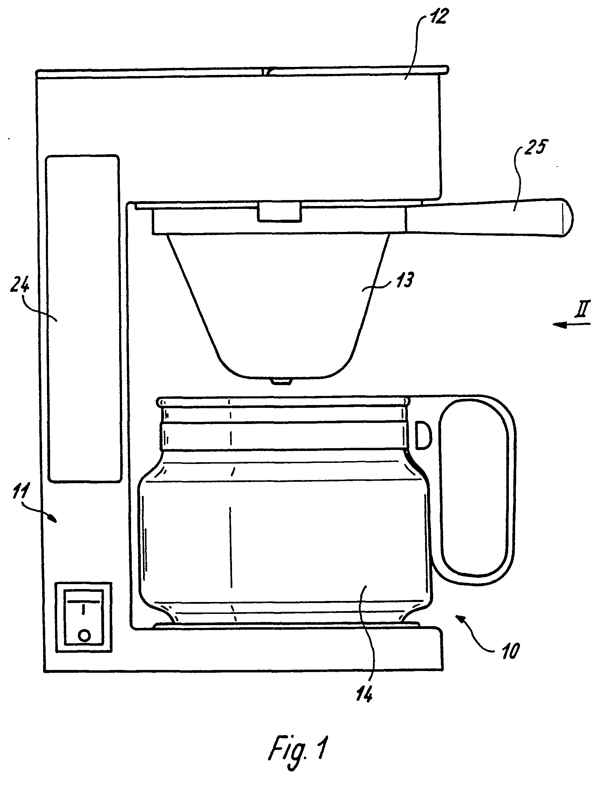

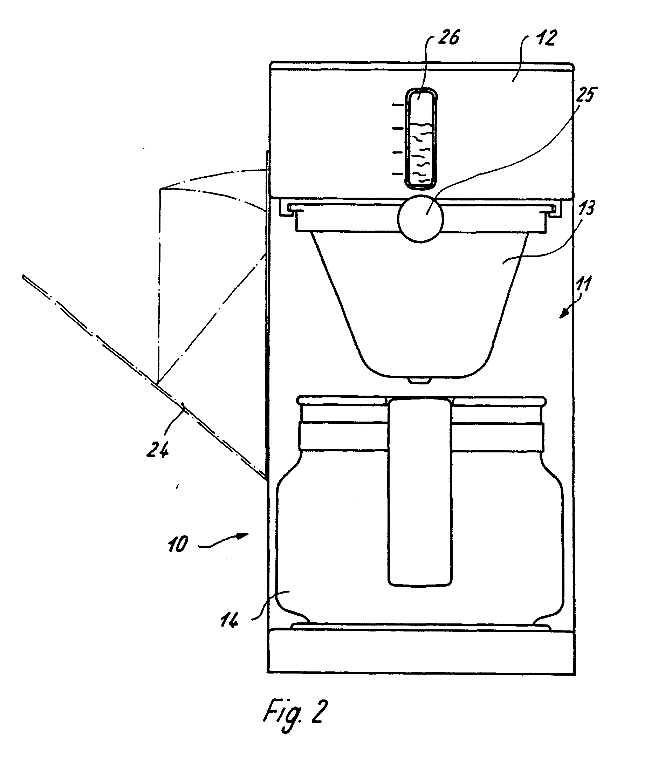

Die in den Fig. 1 und 2 jeweils in Ansichten dargestellte und insgesamt mit dem Bezugszeichen 10 versehene Kaffeemaschine besteht im wesentlichen ais einem etwa L-förmigen Gehäuse 11, einem am oberen Ende des vertikalen Schenkels des Gehäuses 11 angebrachten Frischwasserbehälter 12, einem interhalb des Frischwasserbehälters 12 mit diesem dicht verbundenen Filtergefäß 13 sowie einem Aufnahmebehälter 14 für gefilterten Kaffee, der auf dem horizontalen, unteren Schenkel des Gehäuses 11 abgestellt ist und sich inmittelbar unterhalb des Filtergefäßes 13 befindet.

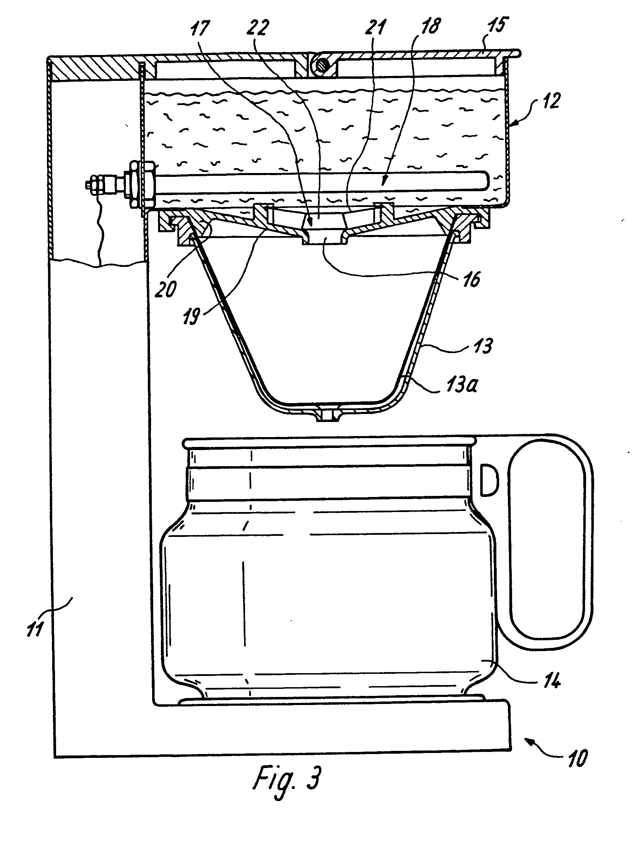

Die Fig. 3 bis 5 zeigen Aufbau und Wirkungsweise des Frischwasserbehälters 12 und des damit lösbar verbundenen Filtergefäßes 13.

Die Fig. 3 bis 5 machen deutlich, daß der Frischwasserbehälter 12 an seiner Oberseite mit einem abklappbaren Deckel 15 versehen ist, nach Öffnen dieses Deckels kann der Frischwasserbehälter 12 mit Frischwasser befüllt werden.

Der Frischwasserbehälter 12 weist weiterhin in seinem unteren Bodenbereich eine Auslauföffnung 16 auf, die zunächst durch ein bewegliches Schließorgan 17 ver schlossen ist.

Auf das Schließorgan 17 wird später noch genauer eingegangen.

Weiterhin befindet sich im dargestellten Ausführungsbeispiel innerhalb des Frischwasserbehälters 12 ein Heizaggregat in Form eines Heizstabes 18.

Es sei schon an dieser Stelle darauf hingewiesen, daß anstelle des Heizstabes 18 auch eine Heizspirale innerhalb des Frischwasserbehälters 12 angeordnet sein kann, ebenso können mehrere Heizstäbe 18 oder mehrere Heizspiralen vorgesehen werden.

Wie die Fig. 3 bis 5 deutlich zeigen, ist der Boden 19 des Frischwasserbehälters 12 etwa kegelförmig ausgebildet, wobei die Spitze des Kegels nach unten weist. Im Bereich des tiefsten Abschnittes des Bodens 19 befindet sich die Auslauföffnung 16.

Das Filtergefäß 13 ist mit dem Frischwasserbehälter 12 lösbar verbunden, im verbundenen Zustand ist der Frischwasserbehälter 12 gegenüber dem Filtergefäß 13 abgedichtet. Zu diesem Zweck ist an der Außenseite des etwa kegelförmig vertieften Bodens 19 des Frischwasserbehälters 12 ein Dichtrand 20 angeformt, an den sich der obere, innere Rand des Filtergefäßes 13 nach der Verbindung mit dem Frischwasserbehälter 12 anlegt. Es ist zweckmäßig, einen Filterpapiereinsatz 13a, den das Filtergefäß 13 aufnimmt, im Dichtungsbereich zwischen Frischwasserbehälter 12 und Filtergefäß 13 einzuklemmen.

Das schon erwähnte Schließorgan 17 besteht im dargestellten Ausführungsbeispiel aus einer Bimetall-Schnappscheibe 21 und einem damit verbundenen Dichtkegel 22. Der Dichtkegel 22 legt sich im Schließzustand auf den Rand der Auslauföffnung 16 und verschließt somit diese Auslauföffnung 16.

Die Funktion der vorstehend beschriebenen neuerungsgemäßen Kaffeemaschine ist wie folgt:

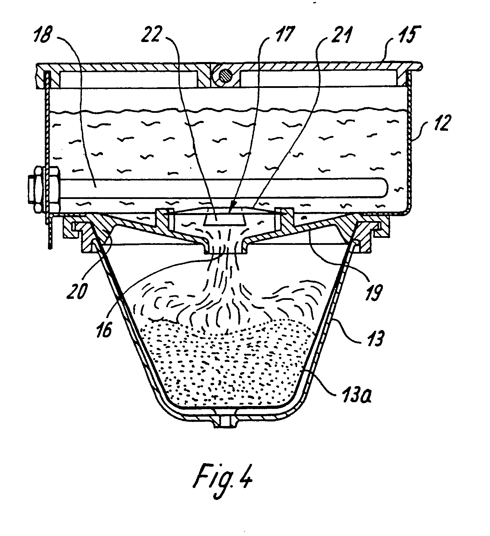

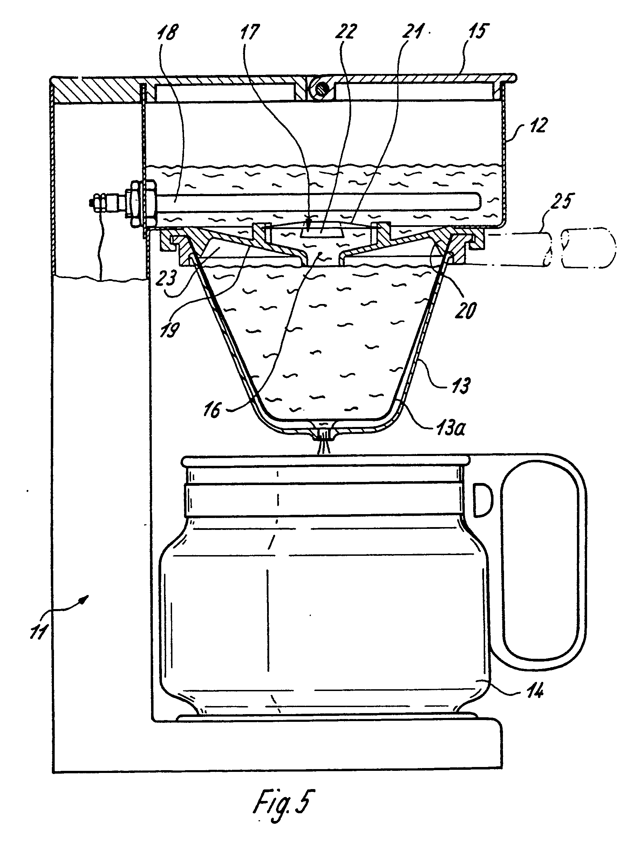

Nach dem Befüllen des Frischwasserbehälters 12 mit Frischwasser und nach dem Einschalten des Heizstabes 18 wird das zunächst kalte Frischwasser auf eine Temperatur von ca. 95°C erhitzt. Sobald die Ansprechschwelle der Bimetall-Schnappscheibe 21 erreicht ist, springt diese aus der aus Fig. 3 ersichtlichen Schließstellung um in die aus den Fig. 4 und 5 ersichtliche Öffnungsstellung. Die Fig. 4 und 5 zeigen deutlich, daß nach Umspringen der Bimetall-Schnappscheibe 21 die Auslauföffnung 16 des Frischwasserbehälters 12 geöffnet ist. Das erhitzte Wasser kann nun, entsprechend dem freien Querschnitt der Auslauföffnung 16 einerseits und der statischen Höhe andererseits, in relativ kurzer Zeit in das Filtergefäß 13 einfließen.

Sobald sich das Filtergefäß 13 vollständig mit Brühwasser gefüllt hat, bilden Frischwasserbehälter 12 und Filtergefäß 13 praktisch ein gemeinsames, großes Gefäß, in dem sich das gesamte eingefüllte Wasser befindet.

Wie insbesondere Fig. 5 deutlich zeigt, befindet sich auch nach der vollständigen Befüllung des Filtergefäßes 13 das Wasser immer noch im Bereich des Heizstabes 18, der nach wie vor eingeschaltet ist. Dies bedeutet, daß das Wasser ständig auf Brühtemperatur gehalten wird. Der Heizstab 18 wird erst dann ausgeschaltet, wenn eine vorgegebene Solltemperatur überschritten ist oder wenn das Wasser in seinem Niveau so weit abgesunken ist, daß der Heizstab 18 nicht mehr von Wasser umspült ist.

Fig. 5 macht deutlich, daß durch die kegelstumpfartige Ausbildung des Bodens 19 des Frischwasserbehälters 12 im Übergangsbereich zwischen Frischwasserbehälter 12 und Filtergefäß 13 ein Ringraum 23 entsteht, der nicht vom Brühwasser erfaßt wird. In diesem Rungraum 23 bildet sich praktisch eine Luftblase. Der Vorteil dieses wasserfreien Ringraumes 23 besteht darin, daß die Außenseite des Bodens 19 des Frischwasserbehälters 12 praktisch nicht verschmutzen kann.

Abweichend von dem in den Zeichnungen dargestellten Ausführungsbeispiel kann das Schließorgan 17 auch als mechanisch bewegliches Schließorgan ausgebildet sein, welches manuell betätigt werden kann. Ein manuell betätigbares Schließorgan bietet allerdings nicht den Komfort der Bimetall-Schnappscheibe mit Dichtkegel wie im dargestellten Ausführungsbeispiel.

Der Heizstab 18 kann thermostatisch gesteuert werden, das heißt, es kann sichergestellt werden, daß der Heizstab 18 nur dann eingeschaltet ist, wenn eine vorbestimmte Wassertemperatur nicht unter- oder überschritten ist.

Da bei der neuerungsgemäßen Kaffeemaschine nicht mehr die Notwendigkeit besteht, im Bereich des Gehäuses 11 einen Durchlauferhitzer unterzubringen, wie dies bislang der Fall war, kann der an sich nur Tragfunktion erfüllende, vertikale Schenkel des Gehäuses 11 mit einem ausklappbaren Fach 24 zur Aufnahme von Filterpapiereinsätzen ausgestattet werden.

Der Frischwasserbehälter 12 kann, sofern er aus einem undurchsichtigen Material gefertigt ist, mit einem Wasserstandsanzeiger 26 versehen sein.

Als zweckmäßige Verbindungsart zwischen Frischwasserbehälter 12 und Filtergefäß 13 empfiehlt sich eine bajonettartige Verriegelung der beiden genannten Teile, wobei zur leichteren Handhabung am Filtergefäß 13 ein gegebenenfalls abnehmbarer Handgriff 25 vorgesehen ist.

**Patentansprüch**

Kaffeemaschine (10) zur Herstellung von gefiltertem Kaffee, bestehend aus einem Frischwasserbehälter (12) mit einer unteren Auslauföffnung (16), einem Heizaggregat (18) zur Erhitzung des Frischwassers, einem Filtergefäß (13) zur Aufnahme eines Filterpapiereinsatzes (13a) sowie einem unterhalb des Filtergefäßes (13) angeordneten Aufnahmebehälter (14) für den gefilterten Kaffee, wobei der Frischwasserbehälter (12) oberhalb des Filtergefäßes (13) angeordnet und das Filtergefäß (13) lösbar sowie abdichtend mit dem Frischwasserbehälter (12) verbunden ist, das Heizaggregat (18) in Form von einem oder mehreren Heizstäben, Heizspiralen od.dgl. im Frischwasserbehälter (12) angeordnet und die Auslauföffnung (16) des Frischwasserbehälters (12) mit einem beweglichen Schließorgan (17) versehen ist, dadurch gekennzeichnet, daß die Außenseite des etwa kegelförmig vertieften Bodens (19) des Frischwasserbehälters (12) einen Dichtrand (20) für den oberen Rand des am Frischwasserbehälter (12) befestigten Filtergefäßes (13) aufweist und daß der Filterpapiereinsatz (13a) im Dichtungsbereich zwischen Frischwasserbehälter (12) und Filtergefäß (13) eingeklemmt ist, wobei im Dichtungsbereich zwischen Frischwasserbehälter (12) und Filtergefäß (13) die Außenseite des Dichtrandes (20) sowie der obere, innere Rand des Filtergefäßes (13) kegelförmig ausgebildet sind.

**Revendication**

Machine à café (10) poir préparation de café filtré, se composant d'un réservoir d'eau fraîche (12) avec une ouverture d'écoulement (16), in corps chauffant (18) pour réchauffer l'eau fraîche, un récipient à filtre (13) pour recevoir une garniture de papier filtre (13a) ainsi qu'un récipient destiné à recueillir le café filtre (14), situé audessous du récipient à filtre (13), le réservoir d'eau fraîche (12) étant placé au-dessous du récipient à filtre (13) et le récipient à filtre (13) étant joint au réservoir d'eau fraîche (12) d'une façon amovible en tant qu'étanche, le corps chauffant (18) sous forme d'un ou plusieurs thermoplongeurs, spirales chauffantes ou appareillages semblables étant placé dans le réservoir d'eau fraîche (12) et l'ouverture d'écoulement (16) du réservoir d'eau fraîche (12) étant munie d'un dispositif de fermeture mobile (17), caractérisé en ce qie la partie extérieure du fond (19) évidé en forme sensiblement conique di réservoir d'eau fraîche (12) comporte un bord (20) rendu étanche pour la fixation du bord supérieur du récipient à filtre (13) sur le réservoir d'eau fraîche (12), et en ce que la garniture de papier filtre (13a) est coincée dans la zone d'étanchéité entre le réservoir d'eau fraîche (12) et le récipient à filtre (13), la partie extérieure du bord rendu étanche (20) ainsi que le bord intérieur supérieur du récipient à filtre (13) étant réalisés en forme conique dans la zone d'étanchéité entre le réservoir d'eau fraîche (12) et le récipient à filtre (13).

**Claim**

Coffee machine (10) for the production of filtered coffee and consisting of a fresh water container (12) with a lower outlet opening (16), a heating unit (18) for the heating of the fresh water, a filter vessel (13) for the reception of a filter paper insert (13a) as well as a receiving container (14) for the filtered coffee and arranged below the filter vessel (13), wherein the fresh water container (12) is arranged above the filter vessel (13) and the filter vessel (13) is detachably as well as sealingly connected with the fresh water container (12), the heating unit (18) in the shape of one or more heating rods, heating coils or the like is arranged in the fresh water container (12) and the outlet opening (16) of the fresh water container (12) is provided with a movable closure organ (17), characterised thereby, that the outside of the about conically deepened base (19) of the fresh water container (12) displays a sealing rim (20) for the upper rim of the filter vessel (13) fastened at the fresh water container (12) and that the filter paper insert (13a) is clamped in the sealing region between the fresh water container (12) and the filter vessel (13), wherein the outside of the sealing rim (20) as well as the upper inner rim of the filter vessel (13) are conically shaped in the sealing region between the fresh water container (12) and the filter vessel (13).

*Fig. 1*

1

Fig. 2

*Fig. 3*

Fig. 4

Fig.5

5